# EUROPEAN PATENT SPECIFICATION

(11) **EP 4 044 077 B1**
(45) Date of publication and mention of the grant of the patent: **09.07.2025**
(21) Application number: 21750523.9
(22) Date of filing: 19.01.2021
(51) Int. Cl.: G06Q 10/30

(54) **USED SECONDARY BATTERY REUSE SYSTEM**
SYSTEM ZUR ALTBATTERIEWIEDERVERWENDUNG
SYSTÈME DE RÉUTILISATION DE BATTERIES SECONDAIRES USAGÉES

(30) Priority: 05.02.2020 JP 2020018289
(43) Date of publication of application: 17.08.2022
(73) Proprietor: Toyo System Co., Ltd., Iwaki-shi, Fukushima 972-8316 (JP)
(72) Inventor: SHOJI, Hideki, Iwaki-shi, Fukushima 972-8316 (JP)
(74) Representative: Schön, Christoph
(86) International application number: PCT/JP2021/001737
(87) International publication number: WO 2021/157346

(56) References cited:
- WO-A1-02/082342
- JP-A- 2002 108 997
- JP-A- 2002 334 182
- JP-A- 2003 248 764
- JP-A- 2006 350 610
- JP-A- 2013 084 198
- JP-A- 2013 140 631
- JP-A- 2018 050 457
- JP-A- 2018 156 454

## Description

### Technical Field

The present invention relates to a used secondary battery reuse system.

### Background Art

A system capable of specifying, when reusing a used secondary battery in another field, an appropriate secondary battery according to the reuse destination is conventionally proposed (see Patent Literature 1).

### Citation List

### Patent Literature

Patent Literature 1: Japanese Patent Application Laid-Open No. 2018-50457.
Document JP 2013 084 198 A relates to a battery search device for searching used battery for an electric vehicle.

### Summary of Invention

### Technical Problem

With this prior art technique, the residual value of each storage battery is calculated based on operation history information of the storage battery, and a storage battery whose residual value satisfies demand information to be satisfied by a storage battery required by a reuse system is selected based on the residual value information.

The transportation cost of a used secondary battery from a storage site to a use site is included in the total amount paid by a purchaser of the used secondary battery. If the transportation cost is high, the total amount of payment is high even when the used secondary battery can be prepared inexpensively. In such a case, the user hesitates about purchasing the used secondary battery.

The prior art technique fails to take into consideration the transportation cost of the used secondary battery from the storage site to the use site. Since there is a possibility that the total amount to be paid by the user when purchasing the used secondary battery is high, wider use of used secondary batteries is hindered.

The present invention therefore has an object of providing a system that can reduce the transportation cost of a used secondary battery and sell the used secondary battery inexpensively.

### Solution to Problem

A used secondary battery reuse system according to the present invention is a used secondary battery reuse system that supports reuse of a used secondary battery used as a secondary battery for vehicle driving, including: a storage unit configured to store position information of each of a plurality of trade-in facilities for trading in a vehicle on which the secondary battery is mounted; a purchase request information reception unit configured to receive, from a purchase applicant who wants to purchase the used secondary battery, purchase request information for the used secondary battery including an intended use of the used secondary battery and position information of a delivery site, and store the purchase request information in the storage unit; a trade-in request information reception unit configured to receive, from a trade-in applicant who wants to trade in the vehicle, trade-in request information including information indicating a degradation state of the secondary battery mounted on the vehicle; an extraction unit configured to extract the purchase request information including the intended use of the used secondary battery that matches the degradation state included in the trade-in request information; a sale price determination unit configured to determine a sale price of the secondary battery to be traded in for the purchase applicant, depending on the intended use of the used secondary battery related to the extracted purchase request information; a transportation cost estimation unit configured to estimate, based on the position information of the delivery site included in the extracted purchase request information and the position information of each of the plurality of trade-in facilities, a transportation cost of the secondary battery to be traded in from each trade-in facility to the delivery site; and a trade-in price determination unit configured to determine a trade-in price of the secondary battery to be traded in in each trade-in facility, based on the sale price and the transportation cost of the secondary battery to be traded in.

In the used secondary battery reuse system according to the present invention, the extraction unit extracts the purchase request information including the intended use of the used secondary battery that matches the degradation state included in the trade-in request information, and the sale price determination unit determines the sale price of the secondary battery to be traded in for the purchase applicant depending on the intended use of the used secondary battery.

Moreover, the transportation cost estimation unit estimates, based on the position information of the delivery site included in the purchase request information and the position information of each of the plurality of trade-in facilities, the transportation cost of the secondary battery to be traded in from each trade-in facility to the delivery site.

Further, the trade-in price determination unit determines the trade-in price of the secondary battery to be traded in in each trade-in facility, based on the sale price and the transportation cost of the secondary battery to be traded in.

In this way, the trade-in price of the secondary battery to be traded in is determined in consideration of the degradation state of the secondary battery to be traded in and the transportation cost based on the position of the delivery site included in the purchase request information and the position of each of the plurality of trade-in facilities. Such a trade-in price is an amount appropriate to the actual state of the secondary battery.

Thus, the used secondary battery reuse system according to the present invention can reduce the transportation cost of the used secondary battery and sell the used secondary battery inexpensively.

Preferably, the used secondary battery reuse system according to the present invention includes a trade-in facility information output unit configured to output the trade-in price in each trade-in facility determined by the trade-in price determination unit and information indicating a position of each trade-in facility, to the trade-in applicant.

In the used secondary battery reuse system according to the present invention, the trade-in facility information output unit outputs the trade-in price in each trade-in facility and the information indicating the position of each trade-in facility to the trade-in applicant.

In this way, the trade-in applicant is informed of the trade-in price in each trade-in facility beforehand, so that the trade-in applicant can sufficiently examine in which trade-in facility the secondary battery is to be traded in. This enhances the trade-in applicant's satisfaction with the trade-in price.

Thus, the used secondary battery reuse system according to the present invention can reduce the transportation cost of the used secondary battery and sell the used secondary battery inexpensively while enhancing the trade-in applicant's satisfaction with the trade-in price.

Preferably, in the used secondary battery reuse system according to the present invention, the trade-in facility information output unit is configured to display information indicating a position of a trade-in facility with a highest trade-in price and the trade-in price in the trade-in facility in a manner different from information about each trade-in facility other than the trade-in facility.

In the used secondary battery reuse system according to the present invention, when outputting the information indicating the trade-in facility with the highest trade-in price and the trade-in price in the trade-in facility to the trade-in applicant, the trade-in facility information output unit displays these information in a manner different from the information about the other trade-in facilities.

In this way, the trade-in applicant can clearly identify the trade-in facility with the highest trade-in price, and therefore efficiently examine in which trade-in facility the secondary battery is to be traded in.

Thus, the used secondary battery reuse system according to the present invention can reduce the transportation cost of the used secondary battery and sell the used secondary battery inexpensively while enabling the trade-in applicant to efficiently examine in which trade-in facility the secondary battery is to be traded in.

Preferably, the used secondary battery reuse system according to the present invention includes: a trade-in information processing unit configured to store information about a traded in secondary battery in the storage unit; a reservation information reception unit configured to receive, from the purchase applicant, information indicating to reserve purchase of the traded in secondary battery, and store the information in the storage unit; and a reservation information output unit configured to output the information indicating to reserve the purchase of the traded in secondary battery stored in the storage unit.

In the used secondary battery reuse system according to the present invention, the reservation information reception unit receives, from the purchase applicant, the information indicating to reserve purchase of the traded in secondary battery, and stores the information in the storage unit.

The reservation information output unit then outputs the stored information indicating to reserve purchase of the traded in secondary battery.

In this way, a person in charge of trade-in of secondary batteries can easily identify which used secondary battery is reserved, and accordingly efficiently manage used secondary battery inventory.

Thus, the used secondary battery reuse system according to the present invention can reduce the transportation cost of the used secondary battery and sell the used secondary battery inexpensively while efficiently managing used secondary battery inventory.

Preferably, in the used secondary battery reuse system according to the present invention, the purchase request information reception unit is configured to receive the purchase request information including information designating a transportation method of the used secondary battery to the delivery site, from the purchase applicant, and the transportation cost estimation unit is configured to estimate the transportation cost based on the information designating the transportation method.

The situation of the delivery site and the like may restrict, for example, the size of a vehicle that can be used for transportation or heavy equipment that can be used for delivery at the site, and the transportation cost may vary responsively.

In the used secondary battery reuse system according to the present invention, the purchase request information reception unit receives the purchase request information including the information designating the transportation method of the used secondary battery to the delivery site, and the transportation cost estimation unit estimates the transportation cost based on the information designating the transportation method.

In this way, the transportation cost is estimated in consideration of the transportation method of the used secondary battery. The transportation cost thus estimated is more appropriate to the actual state.

Thus, the used secondary battery reuse system according to the present invention can reduce the transportation cost of the used secondary battery and sell the used secondary battery inexpensively at an amount appropriate to the actual state.

Preferably, in the used secondary battery reuse system according to the present invention, the transportation cost estimation unit is configured to calculate a distance from each trade-in facility to the delivery site for the secondary battery to be traded in, and estimate, based on the calculated distance, the transportation cost of the secondary battery to be traded in from each trade-in facility to the delivery site.

In the used secondary battery reuse system according to the present invention, the transportation cost estimation unit estimates the transportation cost of the secondary battery to be traded in from each trade-in facility to the delivery site based on the distance from the trade-in facility to the delivery site for the secondary battery to be traded in.

In this way, the transportation cost estimation process is performed based on specific information, namely, distance. This enhances the transportation cost estimation accuracy.

Thus, the used secondary battery reuse system according to the present invention can reduce the transportation cost of the used secondary battery and sell the used secondary battery inexpensively while enhancing the transportation cost estimation accuracy.

Preferably, in the used secondary battery reuse system according to the present invention, the transportation cost estimation unit is configured to exclude each trade-in facility whose distance to the delivery site for the secondary battery to be traded in is greater than or equal to a predetermined distance, from the estimation of the transportation cost.

Trading in the secondary battery at a trade-in facility located far away from the delivery site requires very high transportation cost for delivery. It is therefore not practical to trade in the secondary battery at a trade-in facility far away from the delivery site.

In the used secondary battery reuse system according to the present invention, the transportation cost estimation unit calculates the distance from each trade-in facility to the delivery site for the secondary battery to be traded in, and excludes each trade-in facility for which the calculated distance is greater than or equal to a predetermined distance from the transportation cost estimation.

In this way, each trade-in facility that is practical for use in trade-in is selected and the transportation cost estimation process is performed from the viewpoint of the transportation cost for delivery, so that the transportation cost can be estimated efficiently.

Thus, the used secondary battery reuse system according to the present invention can reduce the transportation cost of the used secondary battery and sell the used secondary battery inexpensively while enhancing the transportation cost estimation efficiency.

Preferably, in the used secondary battery reuse system according to the present invention, the purchase request information reception unit is configured to receive the purchase request information including information designating a desired delivery time of the used secondary battery to the delivery site, the used secondary battery reuse system includes a required degradation state determination unit configured to determine a degradation state required at a time of trade-in of the secondary battery to be traded in, based on the intended use of the used secondary battery and the information designating the desired delivery time included in the purchase request information, and the extraction unit is configured to extract the purchase request information corresponding to the degradation state required at the time of trade-in of the secondary battery to be traded in that matches the degradation state included in the trade-in request information.

In the case where the period from when the used secondary battery is traded in to when the used secondary battery is delivered to the purchase applicant is long, there is a possibility that the degradation state of the used secondary battery in storage progresses. Hence, at trade-in, the trade-in price needs to be determined in consideration of the progress of degradation during storage.

In the used secondary battery reuse system according to the present invention, the required degradation state determination unit determines the degradation state required at the time of trade-in of the secondary battery to be traded in based on the intended use of the used secondary battery included in the trade-in request information and the information designating the desired delivery time.

The extraction unit then extracts the purchase request information corresponding to the degradation state required at the time of trade-in of the secondary battery to be traded in that matches the degradation state included in the trade-in request information.

In this way, the purchase request information is extracted in consideration of the progress of degradation during storage, and the trade-in price for the extracted purchase request information is determined. The trade-in price determined in such a manner is more appropriate to the actual state.

Thus, the used secondary battery reuse system according to the present invention can reduce the transportation cost of the used secondary battery and sell the used secondary battery inexpensively at an amount appropriate to the actual state.

### Brief Description of Drawings

FIG. 1 is a block diagram illustrating an overall structure of a used secondary battery reuse system according to the present invention.
FIG. 2A is a diagram illustrating data used in processes by the used secondary battery reuse system according to the present invention.
FIG. 2B is a diagram illustrating data used in processes by the used secondary battery reuse system according to the present invention.
FIG. 2C is a diagram illustrating data used in processes by the used secondary battery reuse system according to the present invention.
FIG. 3A is a flowchart illustrating processes by the used secondary battery reuse system according to the present invention.
FIG. 3B is a flowchart illustrating processes by the used secondary battery reuse system according to the present invention.
FIG. 4 is a diagram illustrating data used in processes by the used secondary battery reuse system according to the present invention.
FIG. 5 is a conceptual diagram illustrating processes by the used secondary battery reuse system according to the present invention.
FIG. 6 is a diagram illustrating information output by the used secondary battery reuse system according to the present invention.

### Description of Embodiments

A used secondary battery reuse system according to an embodiment of the present invention will be described below, with reference to the drawings. The same components are given the same reference signs, and their description may be omitted.

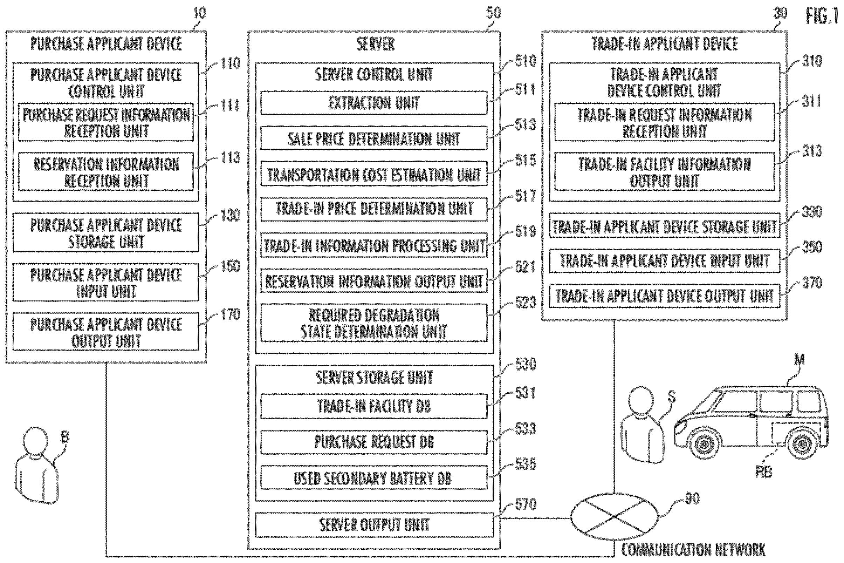

The used secondary battery reuse system according to this embodiment is a system that supports reuse of used secondary batteries used as secondary batteries for vehicle driving, and includes, for example, a purchase applicant device 10, a trade-in applicant device 30, and a server 50. The purchase applicant device 10 and the server 50 are connected via a communication network 90 so as to be communicable with each other, and the trade-in applicant device 30 and the server 50 are connected via the communication network 90 so as to be communicable with each other. Although only one purchase applicant device 10 and only one trade-in applicant device 30 are illustrated in FIG. 1, the number of purchase applicant devices 10 operating simultaneously and the number of trade-in applicant devices 30 operating simultaneously may be one or more.

The purchase applicant device 10 is a device such as a smartphone, a tablet, or a personal computer used by a purchase applicant B when operating the used secondary battery reuse system.

The purchase applicant device 10 includes, for example, a purchase applicant device control unit 110, a purchase applicant device storage unit 130, a purchase applicant device input unit 150, and a purchase applicant device output unit 170.

The purchase applicant device control unit 110 is composed of a processor such as a central processing unit (CPU), memory, an input/output (I/O) device, and the like.

The purchase applicant device control unit 110 reads and executes a predetermined program to function, for example, as a purchase request information reception unit 111 and optionally further as a reservation information reception unit 113.

The purchase request information reception unit 111 receives, from the purchase applicant B who wants to purchase a used secondary battery, purchase request information for the used secondary battery including an intended use of the used secondary battery and position information of a delivery site, and stores the purchase request information in a server storage unit 530.

The purchase request information reception unit 111 may further receive information designating a transportation method of the used secondary battery to the delivery site and/or a desired delivery time of the used secondary battery, and store the received information in the server storage unit 530.

The reservation information reception unit 113 receives, from the purchase applicant B, information indicating to reserve purchase of a traded in secondary battery RB, and stores the received information in the server storage unit 530.

The purchase applicant device storage unit 130 is composed of, for example, a storage device such as Read Only Memory (ROM), Random Access Memory (RAM), or a Hard Disk Drive (HDD). The purchase applicant device storage unit 130 stores information necessary for the operation of the purchase applicant device 10.

The purchase applicant device input unit 150 receives information input by the purchase applicant B, and is, for example, a keyboard, a touch panel, a mouse, and/or other pointing devices. The purchase applicant device output unit 170 outputs information to the purchase applicant B, and is, for example, a display.

The trade-in applicant device 30 is a device such as a smartphone, a tablet, or a personal computer used by a trade-in applicant S when operating the used secondary battery reuse system.

The trade-in applicant device 30 includes, for example, a trade-in applicant device control unit 310, a trade-in applicant device storage unit 330, a trade-in applicant device input unit 350, and a trade-in applicant device output unit 370.

The trade-in applicant device control unit 310 reads and executes a predetermined program to function, for example, as a trade-in request information reception unit 311 and a trade-in facility information output unit 313.

The trade-in request information reception unit 311 receives, from the trade-in applicant S who wants to trade in a vehicle M, trade-in request information including information indicating the degradation state of a secondary battery RB mounted on the vehicle M. For example, the degradation state of the secondary battery RB is the SOH (State Of Health) of the secondary battery RB.

The trade-in facility information output unit 313 outputs the trade-in price in each trade-in facility determined by a trade-in price determination unit 517 and information indicating the position of each trade-in facility, to the trade-in applicant S via the trade-in applicant device output unit 370.

The trade-in applicant device storage unit 330 is composed of, for example, a storage device such as ROM or an HDD, and stores information necessary for the operation of the trade-in applicant device 30.

The trade-in applicant device input unit 350 receives information input by the trade-in applicant S, and is, for example, a keyboard, a touch panel, a mouse, and/or other pointing devices. The trade-in applicant device input unit 350 may be, for example, a camera, or a terminal and a sensor for acquiring the degradation state (SOH) of the secondary battery RB mounted on the vehicle M from the secondary battery RB directly or via the vehicle M.

The trade-in applicant device output unit 370 outputs information to the trade-in applicant S, and is, for example, a display.

The server 50 is, for example, a computer including a server control unit 510, the server storage unit 530, and a server output unit 570. The server 50 may be one device or be composed of a plurality of devices, and may be installed in each trade-in facility.

The server control unit 510 reads and executes a predetermined program to function, for example, as an extraction unit 511, a sale price determination unit 513, a transportation cost estimation unit 515, and the trade-in price determination unit 517 and optionally further as a trade-in information processing unit 519, a reservation information output unit 521, and a required degradation state determination unit 523.

The extraction unit 511 extracts purchase request information including an intended use of a used secondary battery that matches the degradation state included in the trade-in request information, from the server storage unit 530.

The sale price determination unit 513 determines the sale price of the secondary battery RB to be traded in for the purchase applicant B, depending on the intended use of the used secondary battery related to the purchase request information extracted by the extraction unit 511.

The transportation cost estimation unit 515 estimates, based on the position information of the delivery site included in the extracted purchase request information and the position information of each of a plurality of trade-in facilities, the transportation cost of the secondary battery to be traded in from each trade-in facility to the delivery site.

The transportation cost estimation unit 515 may estimate the transportation cost further based on the information designating the transportation method of the used secondary battery.

The trade-in price determination unit 517 determines the trade-in price of the secondary battery to be traded in in each trade-in facility, based on the sale price and the transportation cost of the secondary battery to be traded in.

The trade-in information processing unit 519 stores information about the traded in secondary battery RB in the server storage unit 530.

The reservation information output unit 521 outputs information indicating to reserve purchase of the traded in secondary battery RB stored in the storage unit 530 by the trade-in information processing unit 519, to a person in charge of a trade-in facility via the server output unit 570.

The required degradation state determination unit 523 determines a degradation state required at the time of trade-in of the secondary battery RB to be traded in, based on the intended use of the used secondary battery and the information designating the desired delivery time included in the trade-in request information.

The server storage unit 530 stores not only the position information of each of the plurality of trade-in facilities for trading in vehicles on which secondary batteries are mounted but also information necessary for the processes by the server control unit 510. In detail, in this embodiment, the server storage unit 530 functions as a storage unit that stores the position information of each of the plurality of trade-in facilities for trading in the vehicle M on which the secondary battery RB for driving is mounted.

The server storage unit 530 stores, for example, a trade-in facility database (DB) 531, a purchase request DB 533, and a used secondary battery DB 535.

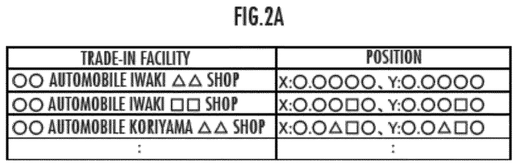

The trade-in facility DB 531 stores, for example, latitude and longitude as the position information of each of the plurality of trade-in facilities for trading in the vehicle M on which the secondary battery RB for driving is mounted, as illustrated in FIG. 2A.

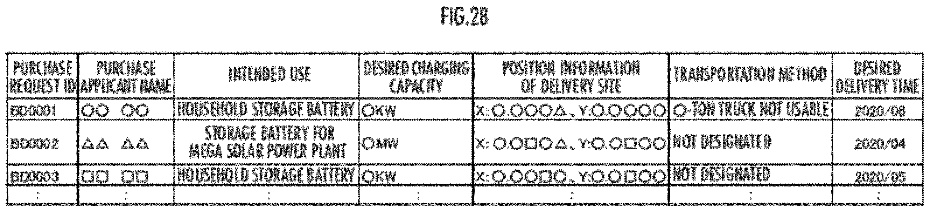

The purchase request DB 533 is a DB for storing purchase request information, and stores, for example, information of a purchase request ID, a purchase applicant name, an intended use of a used secondary battery, desired charging capacity, position information (latitude and longitude) of a delivery site, a transportation method, and a desired delivery time, as illustrated in FIG. 2B.

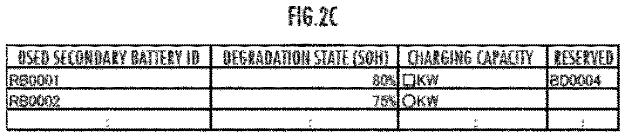

The used secondary battery DB 535 is a DB for storing information about each traded in secondary battery, and stores, for example, information of a used secondary battery ID, a degradation state (SOH), and charging capacity, as illustrated in FIG. 2C. In the case where the used secondary battery RB is reserved, the used secondary battery DB 535 also stores the purchase request ID of the corresponding purchase request information as information indicating that the used secondary battery RB is reserved.

The server output unit 570 outputs information to a person in charge of a trade-in facility, and is, for example, a display.

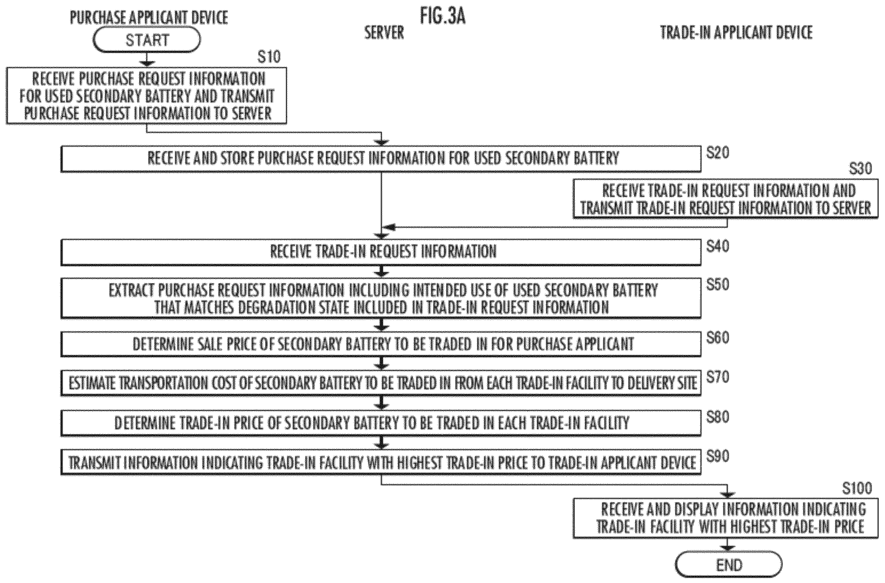

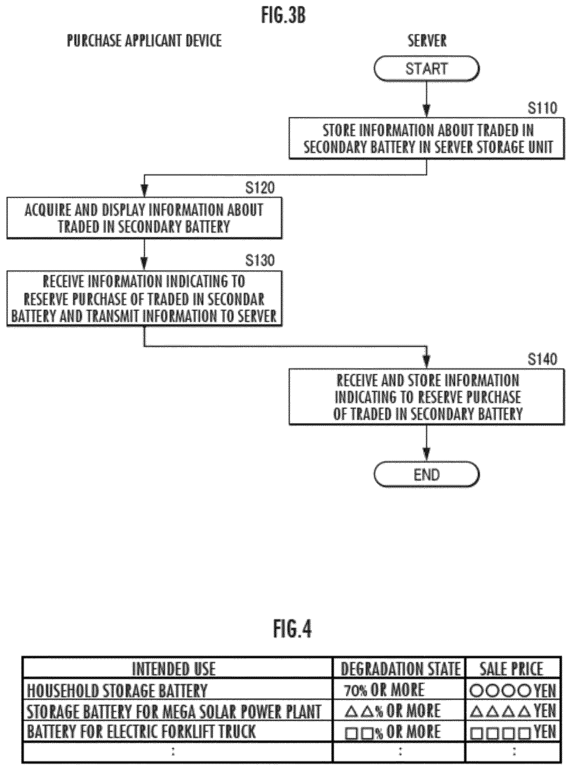

Processes by the used secondary battery reuse system according to this embodiment will be described below, with reference to FIG. 3A and FIG. 3B.

### <Overview of processes>

First, a series of processes until information indicating a trade-in facility with the highest trade-in price and the trade-in price in the trade-in facility are output to the trade-in applicant S will be described below, with reference to FIG. 3A.

The series of processes by the used secondary battery reuse system according to this embodiment is, for example, executed at any time in response to operation by the purchase applicant B using the purchase applicant device 10.

Upon the start of the processes, first, the purchase request information reception unit 111 in the purchase applicant device 10 receives, from the purchase applicant B who wants to purchase a used secondary battery, purchase request information for the used secondary battery including an intended use of the used secondary battery and position information of a delivery site, and transmits the purchase request information to the server 50 (S10 in FIG. 3A).

Here, the purchase request information received by the purchase request information reception unit 111 may include information designating a transportation method of the used secondary battery to the delivery site and/or information designating a desired delivery time of the used secondary battery to the delivery site, according to need.

The server storage unit 530 stores the purchase request information received from the purchase applicant device 10 (S20 in FIG. 3A).

After this, in response to operation by the trade-in applicant S who wants to trade in the vehicle M using the trade-in applicant device 30, the trade-in request information reception unit 311 receives, from the trade-in applicant S, trade-in request information including information indicating the degradation state (SOH) of the secondary battery RB mounted on the vehicle M, and transmits the trade-in request information to the server 50 (S30 in FIG. 3A).

Various methods of receiving the degradation state (SOH) are available. For example, in the case where the vehicle M itself has a function of displaying the SOH of the secondary battery, the trade-in applicant may input the SOH displayed by the vehicle M manually or through image capture using the trade-in applicant device input unit 350 in the trade-in applicant device 30. Alternatively, the trade-in applicant device input unit 350 may, for example, acquire the degradation state (SOH) of the secondary battery RB mounted on the vehicle M via the vehicle M or, in the case where the trade-in applicant device input unit 350 includes a terminal and a sensor for directly acquiring the degradation state (SOH) of the secondary battery RB from the secondary battery RB, using the terminal and the sensor, to receive the degradation state (SOH).

The extraction unit 511 in the server 50 then receives the trade-in request information (S40 in FIG. 3A), and extracts purchase request information including an intended use of a used secondary battery that matches the degradation state included in the received trade-in request information (S50 in FIG. 3A).

More specifically, the extraction unit 511 acquires each set of purchase request information with reference to the purchase request DB 533 in the server storage unit 530, and recognizes the degradation state corresponding to the intended use included in each set of purchase request information with reference to, for example, a table storing each intended use of a used secondary battery and a degradation state corresponding to the intended use as illustrated in FIG. 4.

The extraction unit 511 then extracts purchase request information including an intended use corresponding to a degradation state that matches the degradation state included in the trade-in request information.

Prior to the extraction process, the required degradation state determination unit 523 may determine a degradation state required at the time of trade-in of the secondary battery RB to be traded in, based on the intended use of the used secondary battery and the information designating the desired delivery time included in each set of purchase request information. In this case, the extraction unit 511 extracts purchase request information corresponding to a degradation state required at the time of trade-in of the secondary battery RB to be traded in that matches the degradation state included in the trade-in request information.

In detail, for example in the case where the degradation state corresponding to the intended use of the used secondary battery included in purchase request information is 80% and degradation is estimated to progress by 5% until the desired delivery time included in the purchase request information, the required degradation state determination unit 523 determines that the degradation state required at the time of trade-in of the secondary battery RB to be traded in is 85%. In this case, if the degradation state included in the trade-in request information is 85% or more, the extraction unit 511 extracts the purchase request information as purchase request information that matches the degradation state included in the trade-in request information.

Following this, the sale price determination unit 513 determines the sale price of the secondary battery RB to be traded in for the purchase applicant B, depending on the intended use of the used secondary battery related to the purchase request information extracted by the extraction unit 511 (S60 in FIG. 3A).

More specifically, for example with reference to the table storing each intended use of a used secondary battery and a sale price corresponding to the intended use illustrated in FIG. 4, the sale price determination unit 513 acquires the sale price corresponding to the intended use included in each set of purchase request information, and determines the acquired sale price as the sale price of the secondary battery RB to be traded in for the purchase applicant B.

The transportation cost estimation unit 515 then estimates, based on the position information of the delivery site included in the purchase request information extracted by the extraction unit 511 and the position information of each of the plurality of trade-in facilities, the transportation cost of the secondary battery RB to be traded in from each trade-in facility to the delivery site (S70 in FIG. 3A).

More specifically, the transportation cost estimation unit 515 specifies, for each of the plurality of trade-in facilities, the transportation path of the used secondary battery RB based on the position information of the delivery site and the position information of the trade-in facility, for example using a known method.

The transportation cost estimation unit 515 then calculates the distance from each trade-in facility to the delivery site for the secondary battery RB to be traded in, for example based on the transportation path. Based on the calculated distance, the transportation cost estimation unit 515 estimates the transportation cost from each trade-in facility to the delivery site by calculating the expenses for the transportation of the used battery RB and the installation of the used battery RB at the site in consideration of the occupancy time of a vehicle used for transportation and equipment used for installation at the site, the required number of personnel and the required time, and other factors that influence the transportation cost.

Here, the transportation cost estimation unit 515 may exclude each trade-in facility whose distance to the delivery site is greater than or equal to a predetermined distance, from the transportation cost estimation.

The trade-in price determination unit 517 then determines the trade-in price of the secondary battery RB to be traded in in each trade-in facility, based on the sale price and the transportation cost of the secondary battery RB to be traded in (S80 in FIG. 3A).

In detail, for example, the trade-in price determination unit 517 determines, as a trade-in base amount, an amount obtained by multiplying the sale price of the secondary battery RB to be traded in by a predetermined cost rate or an amount obtained by subtracting a predetermined profit from the sale price. Alternatively, the trade-in price determination unit 517 may store the trade-in base amount calculated beforehand in the same way in the server storage unit 530, and acquire the stored trade-in base amount to thus determine the trade-in base amount.

The trade-in price determination unit 517 then determines an amount obtained by subtracting, from the determined trade-in base amount, the transportation cost from each trade-in facility to the delivery site estimated as described above, as the trade-in price of the secondary battery RB to be traded in in the trade-in facility.

In the case where a plurality of sets of purchase request information are extracted by the extraction unit 511, the sale price, the transportation cost, and the trade-in price are determined or estimated for each extracted set of purchase request information.

The trade-in price determination unit 517 then transmits information indicating a trade-in facility with the highest trade-in price and the trade-in price in the trade-in facility, to the trade-in applicant device 30. Here, the trade-in price determination unit 517 may also transmit information indicating at least one trade-in facility other than the trade-in facility with the highest trade-in price and the trade-in price in the trade-in facility to the trade-in applicant device 30.

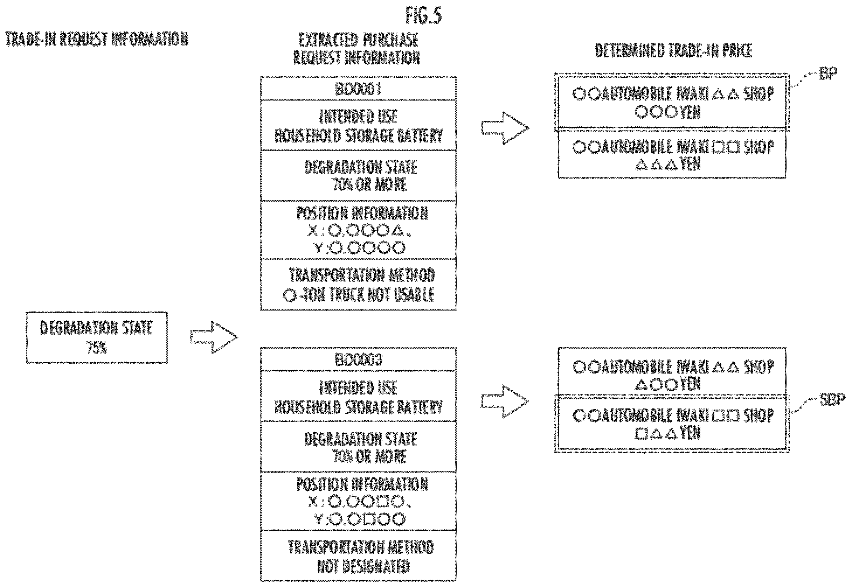

FIG. 5 is a conceptual diagram schematically illustrating process flow in S30 to S90 described above. The degradation state included in the received trade-in request information is "75%", so that data whose purchase request ID is "BD0001" and data whose purchase request ID is "BD0003" are each extracted as purchase request information including an intended use corresponding to a degradation state of "70% or more".

A trade-in price is then determined for each trade-in facility and for each set of purchase request information. In this example, "∘∘∘ yen" in "∘∘ Automobile Iwaki ΔΔ Shop" is selected as the highest trade-in price, and "□ΔΔ yen" in "∘∘ Automobile Iwaki □□ Shop" is selected as the second highest trade-in price.

The trade-in facility information output unit 313 in the trade-in applicant device 30 then receives the information indicating the trade-in facility with the highest trade-in price, displays the information by the trade-in applicant device output unit 370 (S100 in FIG. 3A), and ends the series of processes.

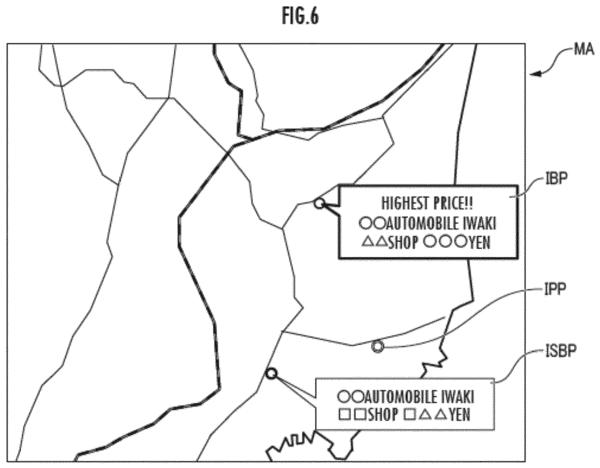

FIG. 6 is a conceptual diagram illustrating information output by the trade-in applicant device 30. A displayed map MA includes a display IBP including information indicating the trade-in facility with the highest trade-in price and the trade-in price in the trade-in facility. The displayed map MA also includes a display ISBP including information indicating the trade-in facility with the second highest trade-in price and the trade-in price in the trade-in facility and a display IPP indicating the current position of the trade-in applicant S.

In this example, the information indicating the position of the trade-in facility with the highest trade-in price and the trade-in price in the trade-in facility are displayed in a different manner from the information about the other trade-in facility (or facilities), so that the trade-in applicant S can recognize that □□ Shop is closer to the current position but the trade-in price is higher in ΔΔ Shop. The trade-in applicant S is therefore encouraged to perform trade-in at ΔΔ Shop with the highest trade-in price.

Next, a series of processes until the traded in secondary battery RB is delivered to the purchase applicant B will be described below, with reference to FIG. 3B. The series of processes in this embodiment is, for example, executed at any time in response to operation by a person in charge of a trade-in facility using the server 50.

Upon the start of the processes, first, the trade-in information processing unit 519 in the server 50 receives information about the traded in secondary battery RB in response to operation by the person in charge of the trade-in facility, and stores the received information in the used secondary battery DB 535 in the server storage unit 530 (S110 in FIG. 3B).

Following this, the reservation information reception unit 113 in the purchase applicant device 10 acquires information about the traded in secondary battery for example in response to operation by the purchase applicant B using the purchase applicant device 10, and displays the acquired information by the purchase applicant device output unit 170 (S120 in FIG. 3B).

In detail, for example, the reservation information reception unit 113 first extracts the purchase request information of the purchase applicant with reference to the purchase request DB 533, and further selects, with reference to the used secondary battery DB 535, trade-in request information including a degradation state that matches the intended use included in the extracted purchase request information. The reservation information reception unit 113 displays the extracted purchase request information and the corresponding trade-in request information by the purchase applicant device output unit 170.

The reservation information reception unit 113 then receives information indicating to reserve purchase of the traded in secondary battery RB from the purchase applicant B, and transmits the received information to the server 50 (S130 in FIG. 3B).

In detail, for example, in response to operation by the purchase applicant B to select the secondary battery RB which the purchase applicant B wants to reserve, the reservation information reception unit 113 transmits the corresponding purchase request ID and used secondary battery ID to the server 50.

The trade-in information processing unit 519 in the server 50 then receives the information indicating to reserve purchase of the traded in secondary battery, stores the received information in the server storage unit 530, and ends the series of processes (S140 in FIG. 3B).

In detail, for example, the trade-in information processing unit 519 receives the purchase request ID and the used secondary battery ID, references the used secondary battery DB based on the used secondary battery ID, and writes the received purchase request ID in the reserved field of the corresponding record to thus store the information in the server storage unit 530.

A person in charge of each trade-in facility can check the reservation status of each traded in secondary battery via the server output unit 570 at any time. When the delivery of a traded in secondary battery to a delivery site ends, for example, the corresponding purchase request information and trade-in request information are deleted from the respective DBs in the server storage unit 530.

As described above, the used secondary battery reuse system according to the present invention can reduce the transportation cost of a used secondary battery and sell the used secondary battery inexpensively.

While an embodiment of the present invention has been described above, the present invention is not limited to such. Various modifications can be made without departing from the gist of the present invention. Moreover, part of the functions or processes may be omitted or the order of the processes may be changed according to need.

For example, the trade-in price determination unit 517 may be configured to, when transmitting information indicating a trade-in facility and a trade-in price in the trade-in facility, exclude information about any trade-in facility whose trade-in price is less than or equal to a predetermined amount from the transmission.

Although the above describes a structure in which information about a traded in secondary battery is acquired in response to operation by the purchase applicant B and displayed by the purchase applicant device output unit 170, the present invention is not limited to such. For example, the trade-in information processing unit 519 may be configured to, upon receiving information about a secondary battery RB that matches purchase request information, automatically notify this to the purchase applicant device 10.

For example, part of the functions of the trade-in applicant device 30 may be implemented by another device communicably connected to the trade-in applicant device 30. In detail, for example, the function of acquiring the degradation state (SOH) of the secondary battery RB from among the functions of the trade-in request information reception unit 311 may be implemented by the other device.

### Description of Reference Numerals

- 10: purchase applicant device
- 30: trade-in applicant device
- 50: server
- 111: purchase request information reception unit
- 113: reservation information reception unit
- 311: trade-in request information reception unit
- 313: trade-in facility information output unit
- 370: trade-in applicant device output unit
- 511: extraction unit
- 513: sale price determination unit
- 515: transportation cost estimation unit
- 517: trade-in price determination unit
- 519: trade-in information processing unit
- 521: reservation information output unit
- 530: server storage unit (storage unit)

## Claims

1. A used secondary battery reuse system that supports reuse of a used secondary battery used as a secondary battery for vehicle driving, the used secondary battery reuse system comprising:
a storage unit configured to store position information of each of a plurality of trade-in facilities for trading in a vehicle on which the secondary battery is mounted;
a purchase request information reception unit configured to receive, from a purchase applicant who wants to purchase the used secondary battery, purchase request information for the used secondary battery including an intended use of the used secondary battery and position information of a delivery site, and store the purchase request information in the storage unit;
a trade-in request information reception unit configured to receive, from a trade-in applicant who wants to trade in the vehicle, trade-in request information including information indicating a degradation state of the secondary battery mounted on the vehicle;
an extraction unit configured to extract the purchase request information including the intended use of the used secondary battery that matches the degradation state included in the trade-in request information;
a sale price determination unit configured to determine a sale price of the secondary battery to be traded in for the purchase applicant, depending on the intended use of the used secondary battery related to the extracted purchase request information;
a transportation cost estimation unit configured to estimate, based on the position information of the delivery site included in the extracted purchase request information and the position information of each of the plurality of trade-in facilities, a transportation cost of the secondary battery to be traded in from each trade-in facility to the delivery site; and
a trade-in price determination unit configured to determine a trade-in price of the secondary battery to be traded in in each trade-in facility, based on the sale price and the transportation cost of the secondary battery to be traded in;
wherein the purchase request information reception unit is configured to receive the purchase request information including information designating a desired delivery time of the used secondary battery to the delivery site,
wherein the used secondary battery reuse system comprises
a required degradation state determination unit configured to determine a degradation state required at a time of trade-in of the secondary battery to be traded in, based on the intended use of the used secondary battery and the information designating the desired delivery time included in the purchase request information, and
wherein the extraction unit is configured to extract the purchase request information corresponding to the degradation state required at the time of trade-in of the secondary battery to be traded in that matches the degradation state included in the trade-in request information.

2. The used secondary battery reuse system according to claim 1, comprising
a trade-in facility information output unit configured to output the trade-in price in each trade-in facility determined by the trade-in price determination unit and information indicating a position of each trade-in facility, to the trade-in applicant.

3. The used secondary battery reuse system according to claim 2, wherein the trade-in facility information output unit is configured to display information indicating a position of a trade-in facility with a highest trade-in price and the trade-in price in the trade-in facility in a manner different from information about each trade-in facility other than the trade-in facility.

4. The used secondary battery reuse system according to any of claims 1 to 3, comprising:
a trade-in information processing unit configured to store information about a traded in secondary battery in the storage unit;
a reservation information reception unit configured to receive, from the purchase applicant, information indicating to reserve purchase of the traded in secondary battery, and store the information in the storage unit; and
a reservation information output unit configured to output the information indicating to reserve the purchase of the traded in secondary battery stored in the storage unit.

5. The used secondary battery reuse system according to any of claims 1 to 4, wherein the purchase request information reception unit is configured to receive the purchase request information including information designating a transportation method of the used secondary battery to the delivery site, from the purchase applicant, and
wherein the transportation cost estimation unit is configured to estimate the transportation cost based on the information designating the transportation method.

6. The used secondary battery reuse system according to any of claims 1 to 5, wherein the transportation cost estimation unit is configured to calculate a distance from each trade-in facility to the delivery site for the secondary battery to be traded in, and estimate, based on the calculated distance, the transportation cost of the secondary battery to be traded in from each trade-in facility to the delivery site.

7. The used secondary battery reuse system according to claim 6, wherein the transportation cost estimation unit is configured to exclude each trade-in facility whose distance to the delivery site for the secondary battery to be traded in is greater than or equal to a predetermined distance, from the estimation of the transportation cost.

## Patentansprüche

1. System zur Wiederverwendung gebrauchter Sekundärbatterien, das die Wiederverwendung einer gebrauchten Sekundärbatterie, die als Sekundärbatterie zum Fahren eines Fahrzeugs verwendet wurde, unterstützt, wobei das System zur Wiederverwendung gebrauchter Sekundärbatterien Folgendes umfasst:
eine Speichereinheit, die konfiguriert ist, Positionsinformationen von jeder einer Vielzahl von Ankaufsstandorten zum Ankauf eines Fahrzeugs zu speichern, in dem die Sekundärbatterie montiert ist;
eine Einheit zum Empfangen von Kaufanfrageinformationen, die konfiguriert ist, von einem Kaufanfragesteller, der die gebrauchte Sekundärbatterie kaufen möchte, Kaufanfrageinformationen für die gebrauchte Sekundärbatterie einschließlich einer beabsichtigten Verwendung der gebrauchten Sekundärbatterie und von Positionsinformationen eines Lieferorts zu empfangen und die Kaufanfrageinformationen in der Speichereinheit zu speichern;
eine Einheit zum Empfangen von Ankaufsanfrageinformationen, die konfiguriert ist, von einem Ankaufsanfragesteller, der das Fahrzeug in Zahlung geben möchte, Ankaufsanfrageinformationen zu empfangen, die Informationen umfassen, die einen Verschlechterungszustand der in dem Fahrzeug montierten Sekundärbatterie angeben;
eine Extraktionseinheit, die konfiguriert ist, die Kaufanfrageinformationen einschließlich der beabsichtigten Verwendung der gebrauchten Sekundärbatterie, die zu dem in den Ankaufsanfrageinformationen enthaltenen Verschlechterungszustand passt, zu extrahieren;
eine Verkaufspreisbestimmungseinheit, die konfiguriert ist, einen Verkaufspreis der Sekundärbatterie, die für den Kaufanfragesteller angekauft werden soll, abhängig von der beabsichtigten Verwendung der gebrauchten Sekundärbatterie, die mit den extrahierten Kaufanfrageinformationen in Verbindung steht, zu bestimmen;
eine Transportkostenschätzeinheit, die konfiguriert ist, basierend auf den in den extrahierten Kaufanfrageinformationen enthaltenen Positionsinformationen des Lieferorts und den Positionsinformationen jedes der Vielzahl von Ankaufsstandorten die Transportkosten der Sekundärbatterie, die angekauft werden soll, von jedem Ankaufsstandort zu dem Lieferort zu schätzen; und
eine Ankaufspreis-Bestimmungseinheit, die konfiguriert ist, einen Ankaufspreis der Sekundärbatterie, die in jedem Ankaufsstandort angekauft werden soll, basierend auf dem Verkaufspreis und den Transportkosten der Sekundärbatterie, die angekauft werden soll, zu bestimmen,
wobei die Einheit zum Empfangen von Kaufanfrageinformationen konfiguriert ist, die Kaufanfrageinformationen zu empfangen, die Informationen umfassen, die einen gewünschten Lieferzeitpunkt der gebrauchten Sekundärbatterie an den Lieferort angeben,
wobei das System zur Wiederverwendung gebrauchter Sekundärbatterien eine Einheit zur Bestimmung des erforderlichen Verschlechterungszustands umfasst, die konfiguriert ist, einen Verschlechterungszustand, der zu dem Zeitpunkt des Ankaufs der Sekundärbatterie, die angekauft werden soll, benötigt wird, auf Grundlage der beabsichtigten Verwendung der gebrauchten Sekundärbatterie und der die in den Kaufanfrageinformationen enthaltene gewünschte Lieferzeit angebenden Informationen zu bestimmen, und
wobei die Extraktionseinheit konfiguriert ist, die Kaufanfrageinformationen zu extrahieren, die dem zu dem Zeitpunkt des Ankaufs erforderlichen Verschlechterungszustand der Sekundärbatterie, die angekauft werden soll, welcher zu dem in den Ankaufsanfrageinformationen enthaltenen Verschlechterungszustand passt, entspricht.

2. System zur Wiederverwendung gebrauchter Sekundärbatterien gemäß Anspruch 1, das eine Einheit zur Ausgabe von Informationen zu Ankaufsstandorten umfasst, die konfiguriert ist, dem Ankaufanfragesteller den von der Ankaufspreis-Bestimmungseinheit bestimmten Ankaufspreis in jedem der Ankaufsstandorte sowie Informationen, die die Position jedes der Ankaufsstandorte angibt, auszugeben.

3. System zur Wiederverwendung gebrauchter Sekundärbatterien gemäß Anspruch 2, wobei die Einheit zur Ausgabe von Informationen zu Ankaufsstandorten konfiguriert ist, Informationen anzuzeigen, die eine Position eines Ankaufsstandorts mit einem höchsten Ankaufspreis und den Ankaufspreis an diesem Ankaufsstandort angeben, und zwar in einer Weise, die sich von Informationen über jeden von dem Ankaufsstandort verschiedenen Ankaufsstandort unterscheidet.

4. System zur Wiederverwendung gebrauchter Sekundärbatterien nach einem der Ansprüche 1 bis 3, umfassend:
eine Verarbeitungseinheit für Ankaufsinformationen, die konfiguriert ist, Informationen über eine angekaufte Sekundärbatterie in der Speichereinheit zu speichern;
eine Einheit zum Empfangen von Reservierungsinformation, die konfiguriert ist, von dem Kaufanfragesteller Informationen zu empfangen, die die Reservierung des Kaufs der angekauften Sekundärbatterie angeben, und die Informationen in der Speichereinheit zu speichern; und
eine Einheit zum Ausgeben von Reservierungsinformationen, die konfiguriert ist, die Informationen auszugeben, die eine Reservierung des Kaufs der angekauften Sekundärbatterie, die in der Speichereinheit gespeichert ist, angeben.

5. System zur Wiederverwendung gebrauchter Sekundärbatterien gemäß einem der Ansprüche 1 bis 4, wobei die Empfangseinheit für Kaufanfrageinformationen konfiguriert ist, von dem Kaufanfragesteller die Kaufanfrageinformationen einschließlich Informationen zur Bezeichnung eines Transportverfahrens der gebrauchten Sekundärbatterie an den Lieferort zu empfangen, und wobei die Transportkostenschätzeinheit konfiguriert ist, die Transportkosten basierend auf den Informationen zur Bezeichnung des Transportverfahrens zu schätzen.

6. System zur Wiederverwendung gebrauchter Sekundärbatterien gemäß einem der Ansprüche 1 bis 5, wobei die Transportkostenschätzeinheit konfiguriert ist, eine Entfernung von jedem Ankaufsstandort zu dem Lieferort für die Sekundärbatterie, die angekauft werden soll, zu berechnen und basierend auf der berechneten Entfernung die Transportkosten der Sekundärbatterie, die angekauft werden soll, von jedem Ankaufsstandort zu dem Lieferort zu schätzen.

7. System zur Wiederverwendung gebrauchter Sekundärbatterien gemäß Anspruch 6, wobei die Transportkostenschätzeinheit konfiguriert ist, jeden Ankaufsstandort, dessen Entfernung zu dem Lieferort der Sekundärbatterie, die angekauft werden soll, größer oder gleich einer vorgegebenen Entfernung ist, von der Schätzung der Transportkosten auszuschließen.

## Revendications

1. Système de réutilisation de batterie secondaire usagée qui prend en charge une réutilisation d'une batterie secondaire usagée utilisée comme batterie secondaire pour la conduite d'un véhicule, le système de réutilisation de batterie secondaire usagée comprenant :
une unité de stockage configurée pour stocker des informations de position de chacune d'une pluralité d'installations d'échange pour l'échange d'un véhicule sur lequel la batterie secondaire est montée ;
une unité de réception d'informations de demande d'achat configurée pour recevoir, depuis un demandeur d'achat qui souhaite acheter la batterie secondaire usagée, des informations de demande d'achat pour la batterie secondaire usagée incluant une utilisation prévue de la batterie secondaire usagée et des informations de position d'un site de livraison, et stocker les informations de demande d'achat dans l'unité de stockage ;
une unité de réception d'informations de demande d'échange configurée pour recevoir, depuis un demandeur d'échange qui souhaite échanger le véhicule, des informations de demande d'échange incluant des informations indiquant un état de dégradation de la batterie secondaire montée sur le véhicule ;
une unité d'extraction configurée pour extraire les informations de demande d'achat incluant l'utilisation prévue de la batterie secondaire usagée qui correspondent à l'état de dégradation inclus dans les informations de demande d'échange ;
une unité de détermination de prix de vente configurée pour déterminer un prix de vente de la batterie secondaire à échanger pour le demandeur d'achat, en fonction de l'utilisation prévue de la batterie secondaire usagée liée aux informations de demande d'achat extraites ;
une unité d'estimation de coût de transport configurée pour estimer, sur la base des informations de position du site de livraison incluses dans les informations de demande d'achat extraites et des informations de position de chacune de la pluralité d'installations d'échange, un coût de transport de la batterie secondaire à échanger depuis chaque installation d'échange jusqu'au site de livraison ; et
une unité de détermination de prix d'échange configurée pour déterminer un prix d'échange de la batterie secondaire à échanger dans chaque installation d'échange, sur la base du prix de vente et du coût de transport de la batterie secondaire à échanger ;
dans lequel l'unité de réception d'informations de demande d'achat est configurée pour recevoir les informations de demande d'achat incluant des informations désignant un temps de livraison souhaité de la batterie secondaire usagée au site de livraison,
dans lequel le système de réutilisation de batterie secondaire usagée comprend une unité de détermination d'état de dégradation requis configurée pour déterminer un état de dégradation requis à un temps d'échange de la batterie secondaire à échanger, sur la base de l'utilisation prévue de la batterie secondaire usagée et des informations désignant le temps de livraison souhaité incluses dans les informations de demande d'achat, et
dans lequel l'unité d'extraction est configurée pour extraire les informations de demande d'achat correspondant à l'état de dégradation requis au temps d'échange de la batterie secondaire à échanger qui correspondent à l'état de dégradation inclus dans les informations de demande d'échange.

2. Système de réutilisation de batterie secondaire usagée selon la revendication 1, comprenant
une unité de délivrance d'informations d'installation d'échange configurée pour délivrer le prix d'échange dans chaque installation d'échange déterminé par l'unité de détermination de prix d'échange et des informations indiquant une position de chaque installation d'échange, au demandeur d'échange.

3. Système de réutilisation de batterie secondaire usagée selon la revendication 2, dans lequel l'unité de délivrance d'informations d'installation d'échange est configurée pour afficher des informations indiquant une position d'une installation d'échange avec un prix d'échange le plus élevé et le prix d'échange dans l'installation d'échange d'une manière différente d'informations sur chaque installation d'échange autre que l'installation d'échange.

4. Système de réutilisation de batterie secondaire usagée selon l'une quelconque des revendications 1 à 3, comprenant :
une unité de traitement d'informations d'échange configurée pour stocker des informations sur une batterie secondaire échangée dans l'unité de stockage ;
une unité de réception d'informations de réservation configurée pour recevoir, depuis le demandeur d'achat, des informations indiquant de réserver un achat de la batterie secondaire échangée, et stocker les informations dans l'unité de stockage ; et
une unité de délivrance d'informations de réservation configurée pour délivrer les informations indiquant de réserver l'achat de la batterie secondaire échangée stockées dans l'unité de stockage.

5. Système de réutilisation de batterie secondaire usagée selon l'une quelconque des revendications 1 à 4, dans lequel l'unité de réception d'informations de demande d'achat est configurée pour recevoir les informations de demande d'achat incluant des informations désignant un mode de transport de la batterie secondaire usagée jusqu'au site de livraison, depuis le demandeur d'achat, et dans lequel l'unité d'estimation de coût de transport est configurée pour estimer le coût de transport sur la base des informations désignant le mode de transport.

6. Système de réutilisation de batterie secondaire usagée selon l'une quelconque des revendications 1 à 5, dans lequel l'unité d'estimation de coût de transport est configurée pour calculer une distance depuis chaque installation d'échange jusqu'au site de livraison pour la batterie secondaire à échanger, et estimer, sur la base de la distance calculée, le coût de transport de la batterie secondaire à échanger depuis chaque installation d'échange jusqu'au site de livraison.

7. Système de réutilisation de batterie secondaire usagée selon la revendication 6, dans lequel l'unité d'estimation du coût de transport est configurée pour exclure chaque installation d'échange dont la distance jusqu'au site de livraison pour la batterie secondaire à échanger est supérieure ou égale à une distance prédéterminée, de l'estimation du coût de transport.
